# EUROPÄISCHE PATENTANMELDUNG

(11) **EP 2 602 431 A1**
(43) Veröffentlichungstag der Anmeldung: **12.06.2013**
(21) Anmeldenummer: 11192222.5
(22) Anmeldetag: 06.12.2011
(51) Int. Cl.: F01D 5/00, B21D 3/16, B23P 6/00

(54) **Vorrichtung und Verfahren zur Umformung von Turbinenschaufeldeckplatten**

(71) Anmelder: Alstom Technology Ltd, 5400 Baden (CH)
(72) Erfinder: Zebec, Igor, 5432 Neuenhof (CH); Schweizer, Raphael, 5426 Lengnau (CH); Schmitt, Tobias, 5210 Windisch (CH); Szücs, Frigyes, 4438 Langenbruck (CH); Stedul, Josip, 5417 Untersiggenthal (CH)

(57) **Zusammenfassung**

Die vorliegende Erfindung betrifft ein Verfahren zur Rekonditionierung einer Deckplatte (10) einer Schaufel (1) einer Turbomaschine, insbesondere einer Gasturbine, mittels einer Umformungsvorrichtung, wobei sich von einem Schaufelfuss (34) der Schaufel (1) aus radial nach aussen bezüglich einer Rotorachse der Turbomaschine ein Montageabschnitt mit Befestigungselementen (36, 37) und in der entgegengesetzten Richtung ein Schaufelblatt (30) anschliesst. Weiter schliesst sich ein Schaufelkopf (33) an das Schaufelblatt (30) und die Deckplatte (10) an den Schaufelkopf (33) an, wobei die Deckplatte (10) in der Richtung entgegen dem Schaufelfuss (34) ausgewölbt ist. In einem ersten Schritt, einem Analyseschritt, werden Dimensionen der Schaufel (1) in Bezug auf die Deckplatte (10) bezüglich vordefinierter Referenzpunkte der Schaufel (1) mittels einer Dimensionsanalyse bestimmt. Wenn nach dem Analyseschritt eine Umformung der Deckplatte (10) aufgrund eines Vergleichs von Messwerten aus dem Analyseschritt mit vordefinierten Dimensionswerten notwendig und möglich scheint, wird die ausgewölbte Deckplatte (10) mittels der Umformungsvorrichtung in einem Umformungsschritt durch Pressen umgeformt, insbesondere zumindest im Wesentlichen glattgepresst. Nach dem Umformungsschritt wird die Deckplatte (10) vorzugsweise in einem oder mehreren Folgeschritten nachbehandelt. Weiter betrifft die Erfindung eine Vorrichtung zur Durchführung des erfindungsgemässen Verfahrens.

## Beschreibung

### TECHNISCHES GEBIET

Die vorliegende Erfindung liegt auf dem Gebiet der Turbinentechnologie, insbesondere der Gasturbinen, und betrifft ein Verfahren nach dem Oberbegriff des Patentanspruchs 1 und eine Vorrichtung nach dem Oberbegriff des Patentanspruchs 11 jeweils zur Umformung einer Deckplatte oder eines Deckbandes einer Turbinenschaufel.

### STAND DER TECHNIK

Turbinenbauteile von Turbomaschinen, beispielsweise Schaufeln von Gasturbinen (man beachte hierzu beispielsweise die EP 0 620 362 B1), sind konstruktions- und funktionsgemäss beträchtlichen thermischen und mechanischen Spannungen ausgesetzt, aufgrund welcher im Verlaufe der bestimmungsgemässen Nutzung der Maschine Schäden, u.a. unerwünschte Materialdeformationen, auftreten können. Dies trifft im Besonderen auf Turbinenschaufeln zu. Solche durch thermische und mechanische Belastung auftretenden Verformungen von Elementen, insbesondere sich relativ zu einem Nachbarelement bewegender Elemente, können zu nachteiligen Reibungs- und/oder Dichtungsverlusten führen. Dies kann die Effizienz der Maschine beeinträchtigen und, beispielsweise verstärkt aufgrund von Materialabtragung, eine Revision der Turbomaschine, mit Fokus auf bestimmte Verschleissteile, erforderlich machen.

Eine (Gas-)Turbine weist vereinfacht ausgedrückt entlang einer Achse einen Kompressionsabschnitt mit einem Verdichter für ein Arbeitsfluid (bspw. für Gas wie Luft), stromabwärts folgend mindestens eine Brennkammer, in welcher unter Brennstoffbeimischung und -zündung unter Druck stehendes Heissfluid, bspw. ein Heissgas, erzeugt wird, und dann, auf die Brennkammer folgend, einen Turbinenabschnitt, mittels welchem mechanische Arbeitsleistung unter teilweiser Entspannung des vorgenannten Heissfluides generiert wird, auf.

In der Turbine können in Strömungsrichtung, beispielsweise in alternierender Anordnung, mehrere Reihen oder Kränze von (rotierenden) Laufschaufeln und (fest stehenden) Leitschaufeln bereitgestellt sein. Zur Strömungsführung des Arbeitsfluids und zur Erreichung eines hohen Wirkungsgrades beim Impulsübertrag vom Arbeitsfluid auf die Laufschaufeln umfasst die Turbineneinheit üblicherweise eine Anzahl von feststehenden Leitschaufeln. Diese sind kranzförmig an einem Innengehäuse oder dem Stator der Turbine befestigt. Die Laufschaufeln dienen zum Antrieb der Turbinenwelle durch Impulsübertrag vom dem die Turbine durchströmenden Arbeitsfluid.

Diese Schaufeln sind also entweder mit an einer Schaufelfuss genannten Grundplatte bspw. auf einem Rotor befestigt und erstrecken sich mit einem Schaufelköper oder -blatt radial nach aussen oder ragen, bspw. mit dem Schaufelfuss auf einem Stator befestigt, mit dem Schaufelkörper von aussen radial gegen die Achse.

Der Schaufelfuss der Leitschaufel kann also zur Fixierung der jeweiligen Leitschaufel am Innengehäuse der Turbine als Wandelement angeordnet und die äussere Begrenzung eines Strömungskanals für das die Turbine durchströmende Arbeitsfluid bilden. An einem dem Schaufelfuss gegenüberliegenden distalen Ende des Schaufelkörpers können sich dichtungsbedingt, wie aus dem Stand der Technik bekannt, Deckplatten oder Deckbänder anschliessen. Der Strömungskanal kann durch ein von aneinandergereihten Deckplatten gebildetes ringförmiges, flächiges Band nach innen begrenzt und damit klar definiert sein. Der Strömungskanal kann zudem von einem im Vergleich zum vorgenannten Arbeitsfluid kühleren Medium umströmt sein, um bspw. eine Temperatur der entsprechenden Turbinenkomponenten zu limitieren.

Um eine möglichst hohe Turbineneintrittstemperatur des Arbeitsfluids oder -mediums und damit einen hohen Wirkungsgrad zu erreichen, werden für die Schaufeln der Turbine spezielle Materialien und Kühlungstechniken eingesetzt. Beispielsweise werden in modernen Gasturbinen die Leit- und Laufschaufeln der Turbine mit Kühlmedium durchströmten Kühlkanälen durchzogen und so gekühlt. Dazu wird in vordefinierter Weise Kühlmedium durch Kühlkanäle und Kühlhohlräume in der Turbinenschaufel (also durch die Leit- und/oder die Laufschaufel) geführt und/oder an verschiedenen Stellen der Schaufel durch entsprechende Öffnungen (Bohrungen, Schlitze) nach aussen geleitet. Eine derartige gekühlte Schaufel ist in der US 5,813,835 beschrieben. Die Turbinenschaufeln samt Deckplatten sind demzufolge unter Betriebsbedingungen hohen Temperaturen und Temperaturgradienten ausgesetzt, was zu derer gebrauchsbedingter Abnutzung führt.

Eine Aufbereitung von aufgrund der vorgenannten Kühlungstechnologie notwendigen Dichtungen einer durch den Gebrauch diesbezüglich abgenutzten Turbinenschaufel ist beispielsweise aus der CH 701 031 A1 bekannt. Diese Druckschrift lehrt, wie derart beschädigte Dichtungen ausgewechselt werden können.

Es können jedoch während des Betriebs auch Schäden an anderen Teilen der Turbinenschaufel auftreten. Aufgrund der thermischen und mechanischen Belastung kann der Kopf der Leit- und/oder Laufschaufel der Turbine deformiert werden. Insbesondere die einen Hohlraum überspannenden Bereiche der Deckplatten können sich nach aussen, d.h. entgegen der Richtung von der jeweiligen Deckplatte zum Schaufelfuss, wölben. Eine solche Auswölbung, und damit der Verlust der ursprünglichen Form, können zu verstärktem oder unerwünschtem Schleifkontakt zwischen der Deckplatte, oder gegebenenfalls einer die Deckplatte abdeckenden Deckschicht, mit der gegenüberliegenden und sich relativ dazu bewegenden Fläche und dementsprechenden Verschleiss führen und eine Aufarbeitung notwendig machen.

In einer Revision der Schaufel muss die Schaufel derart überarbeitet werden, dass sie bei Wiedereinbau den hohen Anforderungen an die Stabilitätsbedingungen und die Passgenauigkeit genügen.

### DARSTELLUNG DER ERFINDUNG

Es ist somit eine Aufgabe der Erfindung, ein verbessertes Verfahren bzw. eine verbesserte Vorrichtung zur Umformung, Rekonditionierung oder Aufarbeitung einer Deckplatte einer Turbinenschaufel insbesondere einer Turbinenleitschaufel nach dem Oberbegriff des Patentanspruchs 1 bzw. des Patentanspruch 11 anzugeben.

Diese und weitere Aufgaben werden erfindungsgemäss durch ein Verfahren zur Rekonditionierung, Umformung oder Aufarbeitung einer Deckplatte einer Schaufel einer Turbomaschine, insbesondere einer Leitschaufel bspw. einer Gasturbine, mittels einer Umformungsvorrichtung, wobei sich von einem Schaufelfuss der Schaufel aus zur einen Seite, bspw. radial nach aussen bezüglich einer Rotorachse der Turbomaschine, ein Montageabschnitt mit Befestigungselementen und in der entgegengesetzten Richtung ein Schaufelblatt anschliesst, wobei sich ein Schaufelkopf an das Schaufelblatt und die Deckplatte an den Schaufelkopf anschliesst, wobei die Deckplatte in der Richtung entgegen dem Schaufelfuss ausgewölbt ist, dadurch gelöst, dass in einem ersten Schritt, einem Analyseschritt, Dimensionen der Schaufel in Bezug auf die Deckplatte bezüglich vordefinierter Referenzpunkte der Schaufel mittels einer Dimensionsanalyse bestimmt werden, und dass, wenn nach dem Analyseschritt eine Umformung der Deckplatte aufgrund eines Vergleichs von Messwerten aus dem Analyseschritt mit Referenzwerten notwendig und möglich scheint, die ausgewölbte Deckplatte mittels der Umformungsvorrichtung in einem Umformungsschritt durch Pressen umgeformt, insbesondere zumindest im Wesentlichen glattgepresst wird. Optional kann nach dem Umformungsschritt die Deckplatte in einem oder mehreren Folgeschritten nachbehandelt werden.

Die Auswölbung der Deckplatte betrifft meist zumindest einen Mittelbereich der flächigen Deckplatte, insbesondere einen Bereich der Deckplatte, unter dem sich ein Hohlraum, bspw. für ein darin zirkulierendes Kühlmittel vorgesehen, befindet. Der Begriff Deckplatte und Deckband werden hier synonym verwendet.

Referenzpunkte sind Orte auf der Schaufel, welche durch den bestimmungsgemässen Gebrauch der Schaufel nicht oder nur minimal von Deformation und/oder Abnutzung betroffen sind. Dies können insbesondere Stellen im Montageabschnitt, also bspw. an den Befestigungselementen, dem Schaufelfuss oder an Randbereichen der Deckplatte selbst sein. Die Referenzpunkte dienen zur Feststellung mittels Distanzmessung, ob die Deckplatte ausgewölbt ist, und ob sie genügend ausgewölbt ist, dass eine erfindungsgemässe Umformung notwendig und durchführbar ist. Eine solche Dimensionsanalyse wird im Analyseschritt durchgeführt.. Im Analyseschritt gesammelte Messwerte werden dann mit vom Turbinenschaufeltyp abhängigen Referenzwerten verglichen und, wenn die Auswölbung grösser als ein Minimalwert ist, wird die Schaufel für die Umformung qualifiziert und der Umformungsschritt kann durchgeführt werden. Folgeschritte sind dann bspw. Schritte, in denen die Deckplatte geschliffen, gereinigt und/oder mit einer oder mehreren Deckschicht versehen wird.

Das erfindungsgemässe Verfahren kann einen nach dem Umformungsschritt auszuführenden Schleifschritt umfassen, welcher mindestens Glattschleifen einer bezüglich der Schaufel äusseren Oberfläche der Deckplatte, vorzugsweise durch CNC-Schleifen, mit keinem oder nur minimalem Grundmaterialabtrag von Material der Deckplatte beinhaltet, wobei nach dem Umformungsschritt und vor oder nach dem Schleifschritt vorzugsweise erneut der Analyseschritt durchgeführt wird, um die Auswirkung des Umformungsschrittes und allenfalls des Schleifschrittes zu bestimmen. Eine Vermeidung von Abtragung von Material der Deckplatte ist zentral, da die Deckplatten optimal auf deren materialtechnisch anspruchsvollen Einsatz abgestimmt sind und Materialabtrag zu einer unerwünschten oder gar gefährlichen strukturellen Schwächung der Schaufel und damit der Turbine führt.

Im einfachsten Falle kann eine ausgewölbte Deckplatte bzw. deren Deckschicht direkt derart abgeschliffen werden, dass die ursprünglich gewünschte Form des Schaufelkopfes im Wesentlichen wiederhergestellt ist, also bspw. plan geschliffen werden. Dieses Vorgehen ist jedoch problematisch, da der Materialabtrag der Deckplatte zu einer Ausdünnung der Deckplatte führt, wodurch vordefinierte Stabilitäts- und Sicherheitsbedingungen verletzt sein können. Das erfindungsgemässe Verfahren ist diesbezüglich vorteilhaft, da es durch den Umformungsschritt eine Ausdünnung der Deckplatte verringert oder gar vermeidet. Damit kann eine Deckplatte öfter und/oder besser aufgearbeitet werden; eine Lebensdauer der Schaufel kann also verlängert werden, was bspw. Kosten spart.

Der Schleifschritt kann ein Schleifen einer Hohlkehle in die Deckplatte umfassen, wobei die Hohlkehle vorzugsweise einem der in der betriebsbereiten Turbomaschine montierten Deckplatte gegenüberliegend angeordneten und sich relativ zur Deckplatte bewegenden Element, beispielsweise dem Rotor, derart korrespondierend angepasst ist, dass die Hohlkehle dieses Element teilweise aufnimmt. In anderen Worten kann der Rotor, oder eben das betreffende Element, in die Hohlkehle einragen, womit Platz- und Dichtungsverhältnisse optimiert sind.

Grundsätzlich ist die Hohlkehle eine Ausnehmung, welche aufgrund der in Turbomaschinen gattungsgemäss auftretenden Kreisbewegungen vorteilhafterweise ein Teil eines Kreiszylinders mit kreissegmentförmiger Querschnittsgestalt ist. Die Hohlkehle kann jedoch auch eine andere, den entsprechenden Konstruktionsverhältnissen der Turbomaschine entsprechende und durch den Fachmann zu bestimmende Form haben. Zum Umformen der Deckplatte während des Umformungsschrittes kann ein die Deckplatte mit einer Druckfläche kontaktierender Pressblock benützt werden, wobei der Pressblock vorzugsweise aus weicherem Material als die Deckplatte, insbesondere aus Aluminium besteht, wobei dieser Pressblock auf seiner Druckfläche vorzugsweise eine nach aussen gerichtete Auswölbung aufweist, mittels welcher eine Eindellung in die Deckplatte, vorzugsweise in einen Mittelbereich der Deckplatte, gepresst wird.

Vor dem Umformungsschritt kann eine allfällig auf der Oberfläche der Deckplatte vorhandene und allfällig abgenützte Deckschicht, beispielsweise eine Honigwabenschicht, in einem Grobabtragungsschritt im Wesentlichen entfernt werden. Hierbei ist darauf zu achten, dass kein Material der Deckplatte abgetragen wird.

Eine abgenützte Deckschicht sollte zumindest so weitgehend entfernt werden, dass der Umformungsschritt bestimmungsgemäss durchgeführt und nicht von Deckschichtmaterial gestört werden kann. Es soll also ein Pressen der Deckplatte möglich sein, welche nahe an eine angestrebte oder gewünschte Form der Deckplatte kommt. Wird also bspw. eine Hohlkehle in der Deckplatte angestrebt, ist das Pressen einer Eindellung vorteilhaft, da dann in einem Schleifschritt weniger Grundmaterial der Deckplatte abgetragen werden muss. Ist nun eine teilweise beschädigte Deckschicht auf dem Deckband vorhanden, so kann eine Pressung mit einem mit der angestrebten Form der Deckplatte korrespondierenden Pressblock zu unerwünschten Verformungen der Deckplatte führen. Aus diesem Grunde sollte eine derart störende Deckschicht zumindest grob abgetragen werden, sodass nur noch Reste der Deckschicht, welche die Umformung nur minimal oder bestenfalls gar nicht beeinträchtigen, verbleiben.

Es ist vorteilhaft, wenn solche Reste erst nach einem allfälligen Schleifschritt beseitigt werden, da ein Schleifschritt im Schleifbereich diese u.U. bereits beseitigt. Nach dem Schleifschritt können also in einem Feinabtragungsschritt allfällige Reste der allfälligen Deckschicht von der Deckplatte entfernt werden, vorzugsweise durch Abschleifen der Reste von der Oberfläche von Hand. Es ist auch hier darauf zu achten, dass keine oder nur minimale Abtragung von Material der Deckplatte stattfindet.

Vorteilhafterweise kann, nach dem Schleifschritt, und gegebenenfalls nach dem Feinabtragungsschritt, in einem Schweissvorbereitungsschritt in einem seitlichen Berührungsbereich zwischen der Deckplatte und dem Schaufelkopf mindestens eine, im Wesentlichen lateral längs der und parallel zur Deckplatte verlaufende Schweissausnehmung eingebracht werden, wobei die Schweissausnehmung Teile der Deckplatte und Teile des Schaufelkopfes ausnimmt.

In einem Schweissschritt die Deckplatte und der Schaufelkopf in den Schweissausnehmungen und die Schweissausnehmungen von innen nach aussen mit Schweissmaterial füllend verschweisst werden. Damit ist die Schweissnaht grossteils in der Schweissausnehmung oder -nut optimal geschützt.

Eine derartige Verschweissung der Deckplatte und des Schaufelkopfes stellt die Verbindung zwischen Deckplatte und Schaufelkopf sicher, sodass allfällig durch die Umformung oder Aufarbeitung bzw. Rekonditionierung der Deckplatte entstandene strukturelle Schwachstellen in der Verbindung zwischen Deckplatte und Schaufelkopf nicht zu späteren Problemen im Betrieb der Turbomaschine führen.

Das erfindungsgemässe Verfahren kann einen Montageschritt umfassen, in welchem eine neue Deckschicht, insbesondere eine metallische Honigwabenschicht mit sich von der Deckplatte weg erstreckenden Waben, vorzugsweise durch Auflötung, auf die Deckplatte aufgebracht wird, wobei eine äussere Oberfläche dieser Deckschicht im Wesentlichen parallel zur Oberfläche der Deckplatte verläuft. Diese Deckschicht soll also gegebenenfalls dimensionsmässig im Wesentlichen die gleich Hohlkehle oder Ausnehmung wie die Deckplatte aufweisen. Es ist denkbar, dass die Deckschicht in ihrer Stärke, also ihrer Dicke, über die Deckplatte variiert. Somit kann die Deckplatte durch die Umformung und das allfällige Schleifen in eine Form gebracht wird, welche eine Form der Deckschicht derartig berücksichtigt, dass erst durch das Aufbringen der Deckschicht auf die Deckplatte eine Ausnehmung in der Deckschicht entsteht, welche die vorgenannte Funktion übernimmt.

Das erfindungsgemässe Verfahren kann einen weiteren Schritt umfassen, in welchem die Umformungsvorrichtung kalibriert wird. Dieser Kalibrierungsschritt stellt auf ein Musterteil ab. Das Musterteil ist eine Form, welche für das Verfahren relevante Teile der wunschgemäss geformten, also nicht deformierten Turbinenschaufel bereitstellt oder simuliert. Im Kalibrierungsschritt wird das Musterteil, welches relevante Abschnitte einer optimal geformten Schaufel mit nicht ausgewölbter Deckplatte, also wunschgemäss geformter, der Oberfläche der Deckplatte entsprechender Musteroberfläche simuliert, in die Umformungsvorrichtung eingesetzt, wobei danach ein von der Umformungsvorrichtung umfasster Presszylinder gegen diese Musteroberfläche gefahren wird, bis der am Presszylinder montierte Pressblock die Musteroberfläche in einer Zielposition unmittelbar berührt, ohne die Musteroberfläche zu verformen oder zu beschädigen, wobei danach vor dem Kalibrierungsschritt den Pressblock in Zielposition nicht unmittelbar kontaktierende Stoppelemente mittels an den Stoppelementen angebrachter Einstellelemente der Umformungsvorrichtung zum Kontakt gegen fest mit dem Pressblock verbundene Anschlagelemente geführt werden, ohne den Pressblock zu bewegen, und wobei die Einstellelemente dann bestimmungsgemäss so festgestellt werden, dass die Stoppelemente über die Einstellelemente bei erneutem Ausfahren des Presszylinders, nach dessen Rückzug, den Pressblock über die Anschlagelemente definiert nur bis zur vorgenannten Zielposition ausfahrbar machen.

Es ist also darauf zu achten, dass vor dem Kalibrierungsschritt die Einstellelemente der Stoppelemente eingefahren sind, die momentane Anschlaghöhe der Stoppelemente also kleiner als die benötigte ist. Hierzu können bspw. die Stoppelemente an der gegen den Pressblock gerichteten Stirnfläche eine Ausnehmung mit einem Gewinde aufweisen, in welche ein Bolzen mit korrespondierendem Gewinde und endseitigem Auflageelement für den Anschlag höhenverstellbar eingeschraubt werden kann. Dem Fachmann sind weitere solche Lösungen bekannt.

Die erfindungsgemässe Vorrichtung zur Umformung einer Deckplatte einer Turbinenschaufel, die Umformungsvorrichtung, zur Durchführung oder Verwendung eines erfindungsgemässen Verfahrens ist dadurch gekennzeichnet, dass in einem Trägerrahmen mit beabstandet angeordneten Seitenelementen, und einem Basiselement und einem Verbindungselement, welche sich jeweils zwischen den Seitenelementen erstrecken, eine durch einen am Verbindungselement angebrachten Presszylinder bewegliche Druckplatte und durch eine Basisplatte begrenzte Druckzelle für die Schaufel bereitgestellt ist, wobei die Schaufel in der Druckzelle mittels Befestigungselemente zwischen sich seitlich der Schaufel von der Basisplatte zur Druckplatte zu freien Enden erstreckenden und die Druckzelle seitlich begrenzenden Stoppelementen feststellbar ist, und wobei die Druckzelle durch Pressen der Druckplatte mittels des Presszylinders auf die Schaufel und gegen die die Druckplatte stoppend ausgestalteten Stoppelemente schliessbar ist.

Hierbei ist die Pressrichtung, also die Hubrichtung des Zylinders, vorzugsweise vertikal. Dem Fachmann ist jedoch klar, dass die Vorrichtung auch derart aufgebaut sein kann, dass die Pressrichtung eine beliebige, insbesondere eine horizontale Richtung ist. Vorzugsweise ist die Vorrichtung derart ausgestaltet, dass eine Anschlaghöhe der Stoppelemente durch sich an den freien Enden der Stoppelemente anschliessende Einstellelemente über einen Bereich von einem Millimeter oder weniger bis etwa 10 bis 20% eines Abstandes des Schaufelfusses zum Schaufelkopf der Schaufel oder der Höhe der Schaufel einstellbar ist.

Sowohl die Stoppelemente und die Einstellelemente als auch die Anschlagelemente sollten derart bereitgestellt ein, dass der Pressblock zuverlässig gestoppt werden kann, wenn die Anschlagelemente auf den Stoppelementen anschlagen.

Der Pressblock kann hierbei auf einer Druckplatte vorgegeben sein, welche sich an eine Kolbenstange des Presszylinders anschliesst. Die durch den Presszylinder unter Druck setzbare Druckplatte presst dann über eine vorzugsweise im Wesentlichen parallel zur Druckplatte verlaufende Druckfläche eines Pressblocks eine am Basiselement festgestellte Schaufel. Hierbei ist der Pressblock vorzugsweise aus einem Material gefertigt ist, welches weicher als das Material der Deckplatte ist, vorzugsweise aus Aluminium, und dass der Pressblock auf der Druckfläche eine vorzugsweise mittig angeordnete Auswölbung aufweist.

Das erfindungsgemässe Verfahren und die erfindungsgemässe Vorrichtung kann zur Umformung, Aufarbeitung oder Rekonditionierung einer Deckplatte einer Turbinenschaufel, insbesondere einer Leitschaufel einer Turbomaschine verwendet werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Seitenansicht einer Leitschaufel einer Gasturbine;
- Fig. 2: ein Blockdiagram einer bevorzugten Ausführungsform des erfindungsgemässen Verfahrens;
- Fig.3 3: eine Ausführungsform eines Pressblocks der erfindungsgemässen Umformungsvorrichtung;
- Fig. 4: eine umgeformte und mit einer Hohlkehle versehene Deckplatte der Leitschaufel nach Fig. 1;
- Fig. 5: einen Ausschnitt einer erfindungsgemässen Umformvorrichtung, in welche eine Leitschaufel nach Fig. 1 eingespannt ist, in perspektivischer Ansicht;
- Fig. 6: einen erweiterten Ausschnitt der erfindungsgemässe Umformungsvorrichtung nach Fig. 5;
- Fig. 7: eine weitere perspektivische Ansicht der Schaufel nach Fig. 1; und
- Fig. 8: einen Querschnitt durch einen oberen Teil einer Schaufel nach Fig. 1.

### BESCHREIBUNG BEVORZUGTER AUSFÜHRUNGSFORMEN

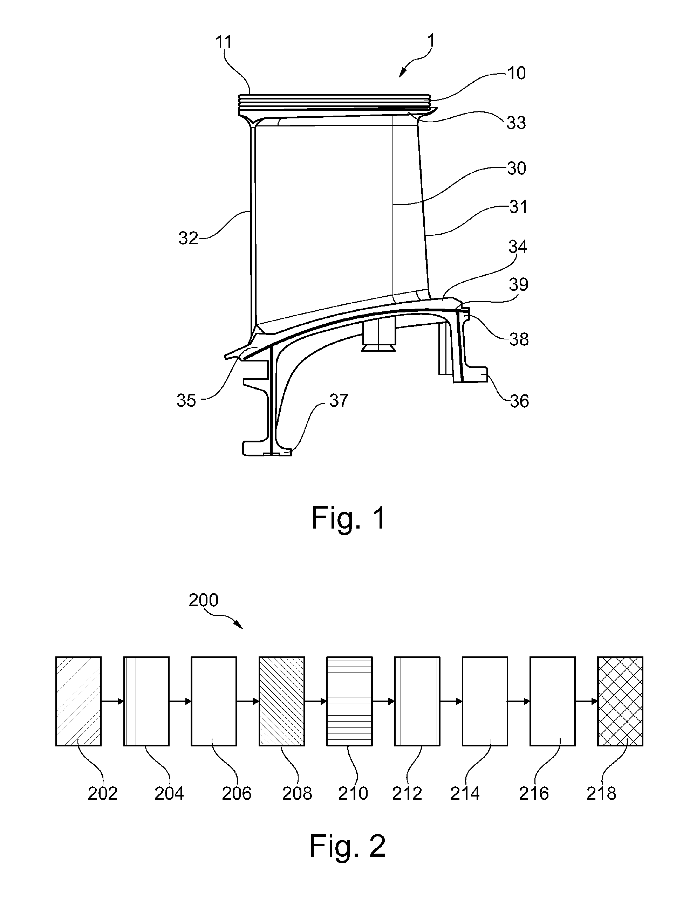

Bevorzugte Ausführungsformen werden nun anhand der Figuren 1 bis 8 erläutert, wobei im Wesentlichen gleiche Elemente mit gleichen Bezugszeichen bezeichnet sind.

In **Fig. 1** ist eine exemplarische Leitschaufel 1 aus dem Stand der Technik in Seitenansicht abgebildet. Von einer Grundplatte des Schaufelfusses 34, erstreckt sich, in Fig. 1 nach oben (d.h. im Wesentlichen senkrecht zur Strömungsrichtung eines Arbeitsfluids), ein vorzugsweise profiliert ausgeformtes Schaufelblatt 30, an welches sich am distalen Ende ein Schaufelkopf 33 anschliesst. Am proximalen Ende der Schaufel 1, also am Schaufelfuss 34, sind nach unten, also entgegengesetzt zur Richtung vom Schaufelfuss 34 zum Schaufelkopf 33, abragende Befestigungselemente 36, 37 zur Befestigung der Schaufel 1 in der Turbine bereitgestellt. Der Schaufelkopf 33 ist im Wesentlichen ein freies Ende der Schaufel 1.

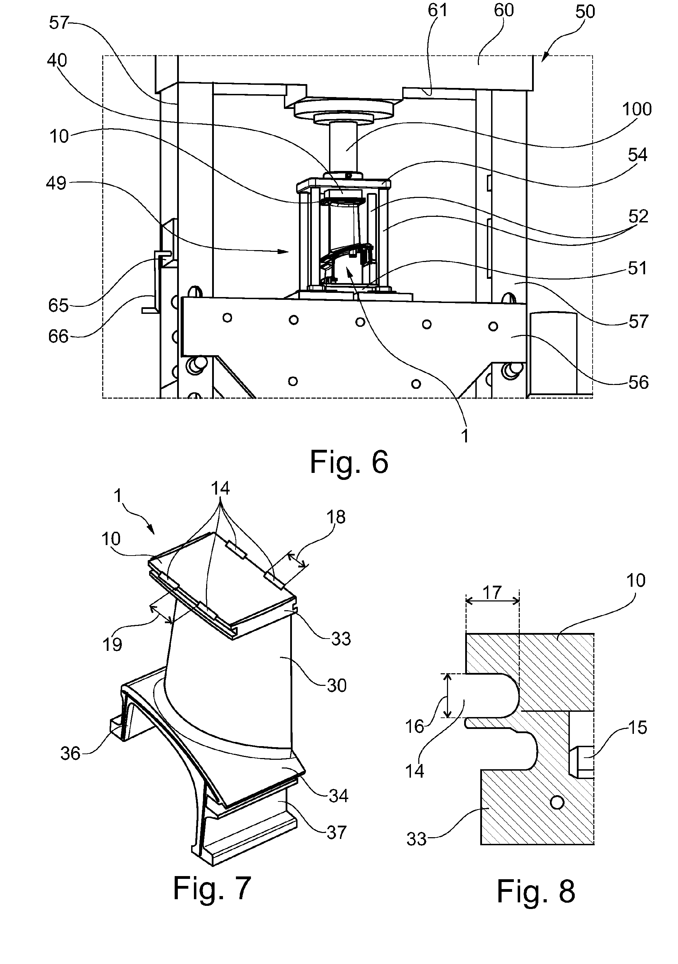

Auf dem Schaufelkopf 33 ist ein Deckband oder eine Deckplatte 10, wie aus dem Stand der Technik bekannt und vorzugsweise von rechteckiger Gestalt, wie bspw. in Fig. 7 erkennbar, vorgesehen. Wie in Fig. 1 ersichtlich, verläuft die Deckenplatte 10 mit ihrer Längsseite im Wesentlichen senkrecht zur Längsrichtung des Schaufelblattes 30, d.h. im Wesentlichen parallel zur Strömungsrichtung. Hierbei ist die Deckplatte 10 mit einer Unterfläche 12 (s. auch Fig. 6) auf dem Schaufelkopf 33 befestigt und stellt eine der Unterfläche 12 gegenüberliegende und bezüglich der Schaufel 1 aussenliegende Oberfläche 11 bereit. Der mittlere Bereich der Deckplatte 10 ist hierbei unterhöhlt (s. Hohlraum 15 in Fig. 8). Auf der Aussenfläche 11 kann zusätzlich eine Deckschicht angebracht sein, bspw. eine metallische Honigwabenstruktur mit einer Dicke oder Stärke von einem Millimeter bis zu einem oder zwei Zentimetern, mit sich senkrecht von der Deckplatte 10 erstreckenden und aussen bezüglich der Schaufel 1 vorzugsweise offenen Zellen oder Hohlräumen. Diese Deckschicht kann zum Schutz der Deckplatte 10 und/oder zur besseren Dichtung dienen.

Das sich quer zur Strömungsrichtung mit einer Druckseite und einer Saugseite zwischen einer Vorderkante 31 und einer Hinterkante 32 erstreckende Schaufelblatt 30 weist im Inneren Kühlkanäle und Kühlräume auf, wobei insbesondere auch der Schaufelkopf 33 teilweise hohl, also Hohlräume 15 (s. Fig. 8) aufweisend ausgestaltet sein kann.

Die in betriebsbereiten Turbomaschinen in Kränzen angeordneten Schaufeln 1 (hier Leitschaufeln) bilden, vorzugsweise durch Kontaktierung von unmittelbar benachbart angeordneten Schaufelfüssen 34 bzw. Deckplatten 10, eine ringförmige äussere bzw. eine innere (bez. der Rotorachse) Begrenzung eines Strömungskanals, in welchem das Arbeitsfluid in Strömungsrichtung an den Schaufelblättern 30 (in Fig. 1 von rechts nach links) vorbeiströmt. In bevorzugten Bereichen der Begrenzung und/oder des Schaufelblatts 30 sind Löcher bzw. Lochreihen angeordnet, durch die ein Kühlmedium in den Strömungskanal einströmen kann und dort einen schützenden Kühlfilm bildet.

Um sich kontaktierende Schaufelfüsse 34 benachbarter Schaufeln 1 abzudichten, kann zwischen sich gegenüberliegenden Seitenflächen 38 der jeweiligen Schaufelfüsse 34 ein Dichtungselement 39, bspw. Streifendichtungen, in sich auf den benachbarten Seitenflächen 38 gegenüberliegenden Dichtungsnuten dichtend eingreifen.

Die Deckplatte 10 oder ggfs. die vorgenannte Deckschicht, welche die Oberfläche im Allgemeinen teilweise, vorzugsweise vollflächig abdeckt, wird nun während des Betriebes der Turbomaschine aufgrund thermischer und mechanischer Belastung deformiert und insbesondere bezüglich der Schaufel 1 nach aussen (in Fig. 1 also nach oben) gewölbt. Durch diese insbesondere in den unterhöhlten Mittelbereichen der Deckplatte 10, und gegebenenfalls auch der Deckschicht, stärker als in deren Randbereichen auftretende Auswölbung kann es zu Schleifkontakt zwischen Teilen der Deckplatte 10 bzw. der Deckschicht und dem gegenüber angeordneten und sich relativ bewegenden Element kommen, wobei es zu Reibungs- und/oder Dichtungsverlusten und/oder Materialabtrag der sich relativ zueinander bewegenden betroffenen Elemente kommen kann.

In **Fig. 2** ist ein Blockdiagramm 200 einer bevorzugten Ausführungsform eines erfindungsgemässen Verfahrens zur Umformung und/oder Rekonditionierung oder Aufbereitung oder Aufarbeitung der bspw. aufgrund der vorstehend erläuterten Benutzung oder aus anderen Gründen entsprechend deformierten Deckplatte 10 dargestellt, wobei einige Verfahrensschritte optionalen Charakter haben.

In einem ersten Schritt, einem Analyseschritt 202, wird eine Dimensionsanalyse der aus der Turbine ausgebauten und allenfalls deformierten Schaufel 1 durchgeführt. Diese Analyse kann mittels bekannter Messinstrumente ausgeführt werden und soll insbesondere aufzeigen, ob eine Deformation, also eine Auswölbung der Deckplatte 10 vorhanden ist, und wenn dem so ist, ob die jeweilige Deformation der Deckplatte 10 eine Umformung mittels des erfindungsgemässen Verfahrens erlaubt. Wenn bspw. eine Auswölbungshöhe über den Optimalverlauf der Oberfläche 11 mehr als 0.1 Millimeter beträgt, kann umgeformt werden.

Es soll eine Nullposition, also die Position der höchsten Erhebung der Deckplatte 10 im mittleren Bereich bezüglich eines oder mehrerer Referenzpunkte bestimmt werden. Ein solcher Referenzpunkt ist hierbei vorzugsweise ein Ort auf der Schaufel 1, welcher nicht unter Deformation durch den bestimmungsgemässen Gebrauch leidet, also beispielsweise ein Punkt am Schaufelfuss 34 oder den Befestigungselementen 36, 37. Es soll also bestimmt werden, ob eine Umformung der Deckplatte 10 für den bestimmungsgemässen Einsatz der Schaufel 1 notwendig ist, und wenn ja, ob die Höhe der Auswölbung im Mittelbereich der Deckplatte 10 über das ursprüngliche Mass gross genug zur erfolgreichen Anwendung des Verfahrens ist. Eine solche Auswölbungshöhe kann beispielsweise etwa 0.1 Millimeter bis etwa 1 Millimeter oder mehr, insbesondere etwa 0.5 Millimeter betragen, hängt im Einzelfall jedoch von einer Form und Ausgestaltung der Schaufel 1 ab. Die Nullposition wird vorteilhafterweise protokolliert.

In einem auf den Analyseschritt 202 folgenden Schritt, welcher vorteilhaft ist, wenn die Deckplatte 10 eine Deckschicht trägt, insbesondere wenn diese Deckschicht teilweise abgenutzt und zu ersetzen ist, wird in einem Grobabtragungsschritt 204 die Deckschicht abgetragen. Hierbei ist darauf zu achten, dass die Deckplatte 10 nicht beschädigt wird und kein Grundmaterialabtrag (Deckplattenmaterialabtrag) stattfindet.

Ist diese Deckschicht beispielsweise eine metallische, auf die Deckplatte 10 aufgelötete Honigwabenschicht mit Waben, welche an einer Unterseite an der Oberfläche 11 der Deckplatte 10 angelötet sind und sich von der Deckplatte 10 erstrecken, so kann diese Wabenschicht beispielsweise mittels eines Pneumatikhammers und/oder mittels Schleifen oder anderer dem Fachmann bekannten Mitteln grob entfernt werden, wobei darauf zu achten ist, weder Material der Deckplatte 10 abzutragen noch die Deckplatte 10 zu beschädigen. Mit einem solchen Pneumatikhammer sind insbesondere Reste von Lot nicht zu entfernen, diese nur minimalhohen Reste können jedoch verbleiben und werden in einem nachfolgenden Schritt entfernt.

Zur Ausführung des Grobabtragungsschrittes 204 kann die Schaufel mit bekannten Spannvorrichtungen oder Schraubvorrichtungen in einer für diese Arbeit günstigen Position festgestellt werden. Nach diesem Schritt können also noch etwaige Reste der Deckschicht (v.a. Reste von Lot vom Anlöten der nun bis auf wenige Reste entfernten Deckschicht) auf der Oberfläche 11 der Deckschicht 10 vorhanden sein. Diese Reste ragen vorzugsweise weniger als 0.05 Millimeter, insbesondere weniger als 0.01 Millimeter über die Deckplatte 10 , insbesondere sollten diese Reste auf der Oberfläche 11 die Deckplatte 10 bei der Umformung nicht ungewollt verformen, also keine unerwünschte lokale Deformationen im Deckplattenmaterial hervorrufen.

Nach diesen sozusagen vorbereitenden Schritten und nach einem Kalibrierungsschritt 206, welcher weiter unten beschrieben wird, kann die Deckplatte 10 nun durch Pressen umgeformt werden. Da nun die Deckplatte 10 flächig gepresst wird, ist es wichtig, dass diese im Wesentlichen glatt ist, also höchstens noch die vorgenannten Reste im Pressbereich aufweist. Dabei soll im Wesentlichen die Auswölbung der Deckplatte 10 korrigiert werden, also eine Umformung in radialer Richtung (bez. der Turbine) vorgenommen werden.

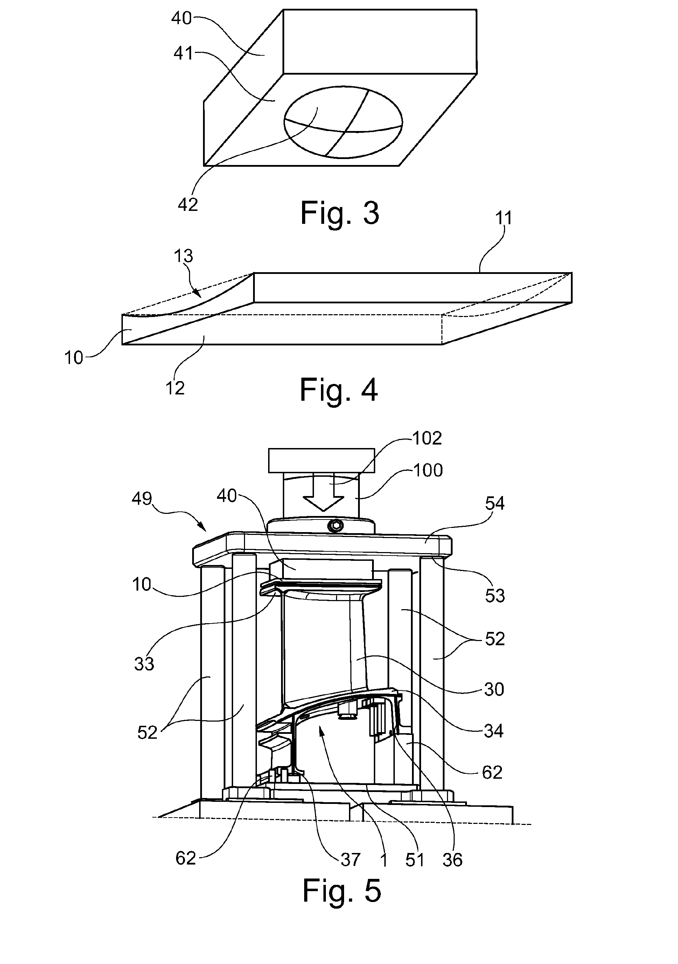

In einem folgenden Umformungsschritt 208 wird nun mittels einer Pressvorrichtung oder einer Umformungsvorrichtung 50, in welche die Schaufel 1 eingespannt wird, die Deckplatte 10, samt der vorgenannten Reste, in radialer Richtung, also gegen den Schaufelfuss 34 gepresst. Hierbei ist es vorteilhaft, wenn ein Presszylinder 100 über eine Druckplatte 54 mit einer Druckfläche 54 eines Pressblock 40 auf die Deckplatte 10 drückt, wobei der Pressblock 40 aus einem Material (bspw. Aluminium) besteht, das weicher als das Material der Deckplatte 10 ist. Des Weiteren ist es vorteilhaft, wenn das Deckplattenmaterial wiederum weicher als das Grundmaterial der Schaufel 1 ist. Diese Materialhärteabstufungen verhindern, dass die Schaufel 1 Schaden beim Pressen nimmt. Zudem ist es vorteilhaft, wenn der Pressblock 40 derart geformt ist, dass beim Pressen eine Eindellung in die Deckplatte 10 gepresst wird. Man beachte hierzu **Fig. 3**. Es ist darauf zu achten, dass bei der Pressung insbesondere im Bereich der Eindellung nicht so viel Druck auf das Schaufelblatt 30 übertragen wird, dass sich dieses nennenswert verformt. Es ist daher vorteilhaft, insbesondere einen vorzugsweise bspw. von Kühlhohlräumen 15 (s. Fig. 8) unterhöhlten Mittelbereich der Deckplatte 10 mit einer grösseren Tiefe einzudellen und gegen die Deckplattenränder die Eindellungstiefe zu verringern. Dazu kann die Druckfläche 41, 42 der Pressblock 40 zumindest teilweise konvex nach aussen gewölbt sein, vorzugsweise mit einer maximalen Erhöhung in einem den Mittelbereich der Deckplatte 10 kontaktierenden Bereich geformt sein, sodass die Druckfläche 41, 42 des Pressblocks 40, welche Kontakt mit der Deckplatte 10 macht, nach aussen gewölbt ist. Auf der Druckfläche 41 ist also eine Auswölbung 42 vorgesehen. Die mittels des Pressblockes 40 unter Pressdruck geformte Eindellung in der Deckplatte 10 kann eine Tiefe gegenüber den Deckplattenrändern bzw. die Auswölbung 42 des Pressblockes 40 eine Höhe gegenüber den im wesentlichen parallel zur Druckplatte 54 verlaufenden Randbereichen der Druckfläche 41 aufweisen. Die Drückfläche 41 kann auch als eine sphärische Fläche ohne flache Abschnitte ausgebildet sein.

Das Einbringen der vorgenannten Eindellung in die Deckplatte 10 ist vorteilhaft, da die Deckplatte 10 bestimmungsgemäss gegen den zylinderförmigen Rotor der Turbomaschine, bspw. die Gasturbinenwelle, ragen und zur optimalen Anpassung der Schaufel 1 eine längs einer Rotorachse des Rotors verlaufende Hohlkehle 13 in der Deckplatte 10 vorgesehen sein kann, wobei der Rotor zumindest teilweise in die Hohlkehle 13 eingreift. In anderen Worten ausgedrückt, ist die Oberfläche 11 der Deckplatte 10 dann optimalerweise nach innen, gegen die Unterfläche 12 der Deckplatte 10 gekrümmt, also konkav geformt. Vorzugsweise weist die Deckplatte 10 also eine kreissegmentförmige und in Strömungsrichtung verlaufende Ausnehmung in Form einer Hohlkehle 13 auf, wobei ein dem Kreissegment zugeordneter Radius vorzugsweise einem Radius des Rotors oder der Turbinenwelle entspricht. Mit der Pressung eine Eindellung kommt man dieser Zielform bereits nahe und ein anschliessend folgendes präzises Schleifen der exakten Hohlkehle 13 führt zu weniger Materialabtragung, als wenn die Oberfläche 11 vor dem Schleifen plan oder gar ausgewölbt wäre und die gesamte Hohlkehle 13 herausgeschliffen werden müsste. Aufgrund der im Turbinenbau verbreiteten Schaufelmaterialien ist ein Druck des aus Aluminium bestehenden Pressblockes 40 auf die Deckplatte 10 mit bis zu etwa 8 bar vorgesehen.

Nach dem Umformungsschritt 208 kann vorzugsweise ein weiterer Analyseschritt 202 durchgeführt werden, um die Auswirkung des Umformungsschrittes 208 auf die vorgenannte Nullposition bezüglich der Referenzpunkte festzustellen.

In einem folgenden Schleifschritt 210 wird die vorgenannte, im eingebauten Zustand in Strömungsrichtung verlaufende Hohlkehle 13 konkave, vorzugsweise kreissegmentförmige Ausnehmung in die Deckplatte 10 eingeschliffen. Die Tiefe der Hohlkehle 13 liegt beispielsweise bei 05 mm bis 1 mm. Die Deckplatte 10 mit Hohlkehle 13 ist schematisch in **Fig. 4** dargestellt. Bei diesem Schleifvorgang, vorzugsweise unter Anwendung der CNC-Technologie, werden in einem Schleifbereich auf der Oberfläche 11 allfällige vorhandene der vorgenannten Reste der Deckschicht und auch sonstige Fehlstellen oder Unebenheiten zumindest teilweise von der Oberfläche 11 beseitig. Aus diesem Grunde sollten im Grobabtragungsschritt 204 daher lediglich den Umformungsschritt 208 negativ beeinflussende Materialerhebungen auf der Deckplatte 10, also bspw. eine defekte Deckschicht, entfernt werden.

Nach dem Schleifschritt 210 auf der Oberfläche 11 befindliche Reste können vorzugsweise in einem (grundsätzlich optionalen) Feinabtragungsschritt 212 vorsichtig von Hand und unter minimalem Grundmaterialabtrag entfernt werden. Bei diesem Prozess werden zudem ggfs. vorhandene Fehlstellen und Unebenheiten, bspw. Beschädigungen, auf der Oberfläche 11 der Deckplatte 10 beseitigt. Damit ist die Deckschicht vollständig von der Deckplatte 10 entfernt und die Schaufel 1 trägt eine wunsch- oder zielgemäss umgeformte und allenfalls mit einer Hohlkehle 13 versehene Deckplatte 10, welche durch die vorgenannten Verfahrensschritte nur minimal oder gar nicht ausgedünnt wurde. Vorzugsweise werden dann weiter in einem Schweissvorbereitungsschritt 214 die seitlich der Schaufel 1 befindlichen Berührungsbereiche zwischen dem Schaufelkopf 33 und der Deckplatte 10 bearbeitet. Man beachte hierzu die **Figuren 7** und **8**. Hierbei wird vorbereitend im Berührungsbereich zwischen der Deckplatte 10 und dem Schaufelkopf 33 mehrere, vorzugsweise vier an der Zahl, seitlich in die Schaufel 1 einragende und im Wesentlichen parallel zur Deckplatte 10 verlaufende Schweissausnehmungen 14 vorbereitet, welche sowohl Teile der Deckplatte 10 als auch Teile des Schaufelkopfes 33 ausnehmen. Diese Schweissausnehmungen 14 weisen eine Höhe 16, eine Tiefe 17 und eine Länge 18 auf, wobei vorzugsweise jeweils 2 Schweissausnehmungen entlang einer Längsseite der Deckplatte 10 angeracht sind, vorzugsweise symmetrisch bezüglich einem Mittelpunkt der Längsseite. Zudem ist es vorteilhaft, wenn sich jeweils zwei Schweissausnehmungen 14 direkt über die Deckplatte 10 gegenüberliegen, wie in Fig. 7 dargestellt. Die Länge 18 der Schweissausnehmung 14 beträgt vorzugsweise etwa 15 Millimeter bis etwa 25 Millimeter, insbesondere etwa 20 Millimeter. Die Tiefe der Schweissausnehmung 14 beträgt vorzugsweise bis etwa 4 Millimeter, die Höhe der Schweissausnehmung bis etwa 3 Millimeter. Je nach Schaufeltyp kann ein Abstand 19 zweier Schweissausnehmungen entlang der Längsseite der Deckplatte 10 etwa 15 Millimeter (für Typ GT24) bis 20 Millimeter (für Typ GT26) betragen. Hierbei ist darauf zu achten, dass die Oberfläche der Schweissausnehmung 14 frei von Lot ist, damit die Verschweissung optimal hält.

In einem auf den Schweissvorbereitungsschritt 214 folgenden Schweissschritt 216 werden die Deckplatte 10 und der Schaufelkopf 33 in den Schweissausnehmungen 14 verschweisst, wobei sich die Schweissausnehmungen 14 dann zusehends durch das Verschweissen mit Schweissmaterial füllen. Beim Verputzen der Schweissnähte bzw. der vorzugsweise vier Schweissschlitze ist dann darauf zu achten, dass kein Grundmaterial der Schaufel 1 abgetragen wird.

In einem weiteren optionalen Montageschritt 218 kann eine Deckschicht auf die Oberfläche 11 der wunschgemäss umgeformten und allenfalls mit einer Hohlkehle 13 versehenen Deckplatte 10 aufgebracht werden. Dazu kann bspw. eine metallische Honigwabenschicht aufgelötet werden. Hierbei soll die Oberfläche der Deckschicht die von der Hohlkehle 13 vorgegebene konkave Form der Oberfläche 11 der Deckplatte 10 im Wesentlichen nachbilden, sodass anstelle der Deckplatte 10 die Deckschicht wie oben genannt um den Rotor bzw. die Turbinenwelle angeordnet ist, respektive der Rotor bzw. die Turbinenwelle wie oben für die Deckplatte 10 beschrieben in die Deckschicht eingreift. Eine bevorzugte Ausführungsform der erfindungsgemässen Umformungsvorrichtung 50 ist in **Fig. 5** und **Fig. 6** dargestellt. Hierbei umfasst die Umformungsvorrichtung 50 einen Trägerrahmen 58 mit einem Basiselement 56, stützenden Seitenelementen 57 und einem die Seitenelemente 57 verbindenden Verbindungselement 60. Dimensionsmässig ist der Rahmen geeignet, an einer Unterseite 61 des Verbindungselement 60 einen nach unten, also in Pressrichtung 102 (s. Fig. 5) ausfahrbaren Presszylinder 100 aufzunehmen. Des Weiteren sind die Seitenelemente 57, welche sich seitlich an das Basiselement 56 anschliessen derart beabstandet und das Verbindungselement 60 in einer solchen Höhe an den Seitenelementen 57 angebracht, dass eine Druckzelle 49, welche die umzuformende Schaufel 1 (oder aber ein nachfolgend beschriebenes Musterteil) in einem Druckzelleninneren aufnehmen kann, vorzugsweise etwa mittig auf dem Basiselement 56 und in Druckrichtung unterhalb des Presszylinder 100 angeordnet werden kann.

An den vorzugsweise hydraulischen oder pneumatisch bewegten Presszylinder 100 schliesst sich eine im Wesentlichen waagrecht bereitgestellte und im wesentlichen viereckige Druckplatte 54 an, welche flächenmässig in einer Draufsicht von oben, die Druckzelle 49 im Wesentlichen abdeckt. Die Druckzelle 49 umfasst weiter eine Basisplatte 51, welche parallel unterhalb beabstandet der Druckplatte 54 angeordnet ist. Zwischen der Basisplatte 51 und der Druckplatte 54 liegt das Druckzelleninnere. Von Eckbereichen der Basisplatte 51 oder vom Basiselement 56 erstrecken sich im Wesentlichen senkrecht nach oben vier Stoppsäulen oder Stoppelemente 52, welche die Druckzelle 49 seitlich begrenzen. Wird die Druckplatte 54 mittels des Presszylinders 100 nach unten in Druckrichtung 102 gefahren, kommt sie, ebenfalls in Eckbereichen, bei einer vordefinierten Hublänge des Zylinders 100, auf den Stoppsäulen 52 zum Anschlag. Die Eckbereiche der Druckplatte 54 sind sozusagen die Anschlagelemente der Stoppelemente 52. Ein zwischen den Stoppelementen 52 und zwischen der Druckplatte 54 und der Basisplatte 51 befindliches Volumen, das Druckzelleninnere, ist geeignet dimensioniert, um eine Schaufel 1 oder ein Musterteil einer Schaufel 1 aufzunehmen. Dabei kann die Schaufel 1 bspw. zwischen den Stoppsäulen 52 hindurchgeführt werden. Auf der Basisplatte 51 sind Befestigungsmittel zur Feststellung der Schaufel 1 bspw. über deren Befestigungsmitteln 36, 37 vorgesehen, bspw. durch Klemmung oder Verschraubung, wobei die Schaufel 1 in einer vorbestimmte Position lösbar fixierbar ist. Diese Position ist derart, dass die Deckplatte 10 der Schaufel 1 symmetrisch und flächig gegenüber der Druckplatte 54 und in einem vordefinierten Höhenbereich zu liegen kommt. Die Druckplatte 54 trägt mittig, also zwischen deren Eckbereichen einen Pressblock 40. Dieser vorzugsweise auswechselbar gestaltete Pressblock 40 ist vorzugsweise das einzige mit der Deckplatte 10 während dem Umformungsschritt 208 pressend in Kontakt tretendende Element, welches unmittelbar mit dem Zylinder 100 verbunden ist, und hat die oben in Bezug auf den Pressblock 40 genannten Eigenschaften, ist also insbesondere aus Aluminium gefertigt, weist eine Druckfläche 41 auf, welche vorzugsweise parallel zur Druckplatte 54 angeordnet ist und hat auf dieser Druckfläche 41 ggfs. eine Auswölbung 42, welche eine deformierte Deckplatte 10 flachpresst oder ggfs. auch noch eindellt. Wie oben beschrieben kann die Druckfläche 41 also auch eine Auswölbung 42, welche einen unterhöhlten Mittelbereich der Deckplatte 10 während des Umformungsschrittes 208 wie oben beschrieben vordefiniert eindellt, aufweisen.

Die Stoppelemente 52 können an ihren freien Enden Einstellelemente 53 aufweisen. Diese Einstellelemente 53 sind bspw. bekannte Einstellschrauben oder Klemmelemente oder andere geeignete Mittel mit Auflageelementen für die Druckplatte 54, sodass eine Länge jedes Stoppelementes 52 individuell über den vorgenannte Höhenbereich, in welchen die Deckplatte 10 zu liegen kommt, einstellbar ist, womit eine Anschlaghöhe der Druckplatte 54 bzw. Druckfläche 41, 42, oder anders ausgedrückt ein Abstand zwischen Basisplatte 51 und Druckplatte 54 bzw. Druckfläche 41, 42 justierbar ist. Die Einstelllänge der Einstellelemente überstreicht also vorzugsweise zumindest teilweise den vorgenannten Höhenbereich, in welchem die in der Druckzelle 49 montierte Deckplatte 10 zu liegen kommt. Damit kann ein nachfolgend beschriebener Kalibrierungsschritt 206 durchgeführt werden.

Die einzelnen Elemente der Umformungsvorrichtung 50 sind in Material und Dimension auf die vorherrschenden Kräfte bei bestimmungsgemässer Benutzung nach einer dem Fachmann bekannten Art abgestimmt.

Wird eine erfindungsgemässe Umformungsvorrichtung 50 verwendet, so ist es vorteilhaft, das erfindungsgemässe Verfahren um einen Kalibrierungsschritt 206 zu erweitern. In diesem Schritt 206 wird der vorzugsweise aus Aluminium bestehende Pressblock 40 auf dem Presszylinder 100 fixiert, beispielsweise festgeschraubt oder festgeklemmt. Sodann wird ein Musterteil, welches relevante Abschnitte einer optimal geformten Schaufel 1 mit nicht ausgewölbter Deckplatte 10, also wunschgemäss geformter, der Oberfläche 11 der Deckplatte 10 entsprechender Musteroberfläche simuliert, in die Umformungsvorrichtung eingespannt. Danach fährt man den Presszylinder 100 gegen diese Musteroberfläche bis der am Presszylinder 100 über die Druckplatte 54 montierte Pressblock 40 die Musteroberfläche in einer Zielposition (die hier der vorgenannten Nullposition entsprechen kann) unmittelbar berührt, ohne jedoch die Musteroberfläche zu verformen oder zu beschädigen.

Danach fährt man die Stoppelemente 52 mittels der Einstellelemente 53 zum Kontakt gegen die Anschlagelemente 54, also die Eckbereiche der Druckplatte 54, ohne den Pressblock 40 zu bewegen, und stellt die Einstellelemente 53 bestimmungsgemäss so fest, dass diese bei erneutem Ausfahren des Presszylinders 100, nach dessen Rückzug, den Pressblock 40 über die Anschlagelemente 54 definiert nur bis zur vorgenannten Zielposition ausfahrbar machen. Man benützt also die vorgenannten Einstellelemente 53, um die Stoppsäulen oder Stoppelemente 52 in der Länge derart anzupassen, dass eine Pressung der Musteroberfläche gerade nicht möglich ist, sondern lediglich eine Berührung. Damit ist die Umformungsvorrichtung 50 kalibriert und späteres Ausfahren des Pressblockes 40 gegen die vordefiniert verspannte, verformte und umzuformende Turbinenschaufel 1 bis zu dessen Zielposition gewährleistet eine Umformung der ausgewölbten Deckplatte 10 in radialer Richtung, sodass der tiefste Punkt der durch den Pressvorgang erzeugten Eindellung aufgrund der Wirkung der Druckfläche 41, 42 des Pressblockes 40 auf gleicher Höhe bezüglich des entsprechenden Referenzpunktes ist, wie der oben beschriebene Berührungspunkt zwischen Musteroberfläche und Pressblock 40 (Zielposition).

Der Presszylinder 100 kann händisch, d.h. bspw. mittels eines Betätigungselements 65 mit einer Handkurbel 66 betätigt werden. Alternativerweise können auch sonst übliche Betätigungsvorrichtungen, bspw. elektronische und/oder von einem Computer gesteuerte Betätigungselemente, vorhanden bereitgestellt sein.

In anderen, in den Figuren nicht dargestellten Ausführungsformen können lediglich ein, zwei, drei oder mehr als vier Stoppelemente 52 vorgesehen sein, wobei vorzugsweise mindestens eines davon wie oben beschrieben einstellbar ausgeführt sind. Es können auch die Stoppelemente 52 fix und die montierte Schaufel höheneinstellbar bereitgestellt werden. Die Basisplatte 51 und/oder die Druckplatte 54, und damit die Druckzelle 49 von oben gesehen, können, wie in den Figuren dargestellt, im Wesentlichen viereckig sein, oder aber eine beliebige andere Form haben. Es ist hierbei einfach wichtig, dass die Schaufel 1, respektive das Musterteil einfach in die Druckzelle 49 eingeführt und festgestellt werden können.

Die Stoppelemente 52 können nach einer anderen, dem Fachmann bekannten Weise ausgeformt sein.

Die vorhergehende Beschreibung der Ausführungsbeispiele gemäss der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

### BEZUGSZEICHENLISTE

- 1: Schaufel
- 10: Deckplatte
- 11: Oberfläche des Deckbandes
- 12: Unterfläche des Deckbandes
- 13: Hohlkehle
- 14: Schweissausnehmung
- 15: Hohlraum

- 16: Höhe der Ausnehmung 14
- 17: Tiefe der Ausnehmung 14
- 18: Länge der Ausnehmung 14
- 19: Abstand zwischen Ausnehmungen 14

- 30: Schaufelblatt
- 31: Vorderkante
- 32: Hinterkante
- 33: Schaufelkopf
- 34: Schaufelfuss
- 35: Montageabschnitt
- 36, 37: Befestigungselement
- 38: Seitenfläche
- 39: Dichtungselement

- 40: Pressblock
- 41: Druckfläche
- 42: Auswölbung
- 49: Druckzelle

- 50: Umformungsvorrichtung
- 51: Basisplatte
- 52: Stoppelemente
- 53: Einstellelemente
- 54: Druckplatte
- 56: Basiselement
- 57: Seitenelement
- 58: Trägerrahmen
- 60: Verbindungselement
- 61: Unterseite des Verbindungselements
- 65: Betätigungsmittel
- 66: Handkurbel

- 100: Presszylinder
- 102: Druckrichtung

- 200: Blockdiagramm
- 202: Analyseschritt
- 204: Grobabtragungsschritt
- 206: Kalibrierungsschritt
- 208: Umformungsschritt
- 210: Schleifschritt
- 212: Feinabtragungsschritt
- 214: Schweissvorbereitungsschritt
- 216: Schweissschritt
- 218: Montageschritt

## Patentansprüche

1. Verfahren zur Rekonditionierung einer Deckplatte (10) einer Schaufel (1) einer Turbomaschine, insbesondere einer Gasturbine, mittels einer Umformungsvorrichtung (50),
wobei sich von einem Schaufelfuss (34) der Schaufel (1) aus radial nach aussen bezüglich einer Rotorachse der Turbomaschine ein Montageabschnitt (35) mit Befestigungselementen (36, 37) und in der entgegengesetzten Richtung ein Schaufelblatt (30) anschliesst, wobei sich ein Schaufelkopf (33) an das Schaufelblatt (30) und die Deckplatte (10) an den Schaufelkopf (33) anschliesst, wobei die Deckplatte (10) in der Richtung entgegen dem Schaufelfuss (34) ausgewölbt ist, **gekennzeichnet durch** wenigstens die folgenden Verfahrensschritte
- dass in einem ersten Schritt, einem Analyseschritt (202), Dimensionen der Schaufel (1) in Bezug auf die Deckplatte (10) bezüglich vordefinierter Referenzpunkte der Schaufel (1) mittels einer Dimensionsanalyse bestimmt werden;
- dass, wenn nach dem Analyseschritt (202) eine Umformung der Deckplatte (10) aufgrund eines Vergleichs von Messwerten aus dem Analyseschritt mit Referenzwerten notwendig und möglich scheint, die ausgewölbte Deckplatte (10) mittels der Umformungsvorrichtung (50) in einem Umformungsschritt (208) **durch** Pressen umgeformt, insbesondere zumindest im Wesentlichen glattgepresst wird; und
- dass gegebenenfalls, nach dem Umformungsschritt (208), die Deckplatte (10) in einem oder mehreren Folgeschritten (210 bis 218) nachbehandelt wird.

2. Verfahren nach Anspruch 1, **dadurch gekennzeichnet, dass** nach dem Umformungsschritt (208) ein Schleifschritt (210) ausgeführt wird, welcher mindestens Glattschleifen einer bezüglich der Schaufel (1) äusseren Oberfläche (11) der Deckplatte (10), vorzugsweise durch CNC-Schleifen mit minimalem Grundmaterialabtrag von Material der Deckplatte (10) beinhaltet, wobei nach dem Umformungsschritt (208) und vor dem Schleifschritt (210) vorzugsweise erneut der Analyseschritt (202) durchgeführt wird, um die Auswirkung des Umformungsschrittes (208) und allenfalls des Schleifschrittes (210) zu bestimmen.

3. Verfahren nach Anspruch 2, **dadurch gekennzeichnet, dass** der Schleifschritt (210) ein Schleifen einer Hohlkehle (13) in die Deckplatte (10) umfasst, wobei die Hohlkehle (13) im montierten Zustand einem der in der betriebsbereiten Turbomaschine montierten Deckplatte (10) gegenüberliegend angeordneten und sich relativ zur Deckplatte (10) bewegenden Element, beispielsweise einem Rotor, derart korrespondierend angepasst ist, dass die Hohlkehle (13) dieses Element teilweise aufnehmen kann.

4. Verfahren nach einem der vorangehenden Ansprüche, **dadurch gekennzeichnet, dass** im Umformungsschritt (208) zum Umformen ein die Deckplatte (10) mit einer Druckfläche (41) kontaktierender Pressblock (40) benützt wird, wobei der Pressblock (40) vorzugsweise aus weicherem Material als die Deckplatte (10), wobei dieser Pressblock (40) auf seiner Druckfläche (41) vorzugsweise eine nach aussen gerichtete Auswölbung (42) aufweist, mittels welcher eine Eindellung in die Deckplatte (10), vorzugsweise in einen Mittelbereich der Deckplatte (10), gepresst wird.

5. Verfahren nach einem der vorangehenden Ansprüche, **dadurch gekennzeichnet, dass** vor dem Umformungsschritt (208) eine allfällig auf der Oberfläche (11) der Deckplatte (10) vorhandene und allfällig abgenützte Deckschicht, beispielsweise eine Honigwabenschicht, in einem Grobabtragungsschritt (204) im Wesentlichen entfernt wird, ohne Material der Deckplatte (10) abzutragen.

6. Verfahren nach dem vorhergehenden Anspruch, **dadurch gekennzeichnet, dass** nach dem Schleifschritt (210) in einem Feinabtragungsschritt (212) allfällige Reste der allfälligen Deckschicht von der Deckplatte (10) entfernt werden, vorzugsweise durch Abschleifen der Reste von der Oberfläche (11) von Hand.

7. Verfahren nach einem der Ansprüche 2 bis 6, **dadurch gekennzeichnet, dass** nach dem Schleifschritt (210), und gegebenenfalls nach dem Feinabtragungsschritt (212), in einem Schweissvorbereitungsschritt (214) in einem seitlichen Berührungsbereich zwischen der Deckplatte (10) und dem Schaufelkopf (33) mindestens eine, im Wesentlichen lateral längs der und parallel zur Deckplatte (10) verlaufende Schweissausnehmung (14) eingebracht werden, wobei die Schweissausnehmung (14) Teile der Deckplatte (10) und Teile des Schaufelkopfes (33) ausnimmt.

8. Verfahren nach dem vorhergehenden Anspruch, **dadurch gekennzeichnet, dass** in einem Schweissschritt (216) die Deckplatte (10) und der Schaufelkopf (33) in den Schweissausnehmungen (14) und die Schweissausnehmungen (14) von innen nach aussen mit Schweissmaterial füllend verschweisst werden.

9. Verfahren nach einem der vorangehenden Ansprüche, **dadurch gekennzeichnet, dass** die Umformungsvorrichtung (50) in einem Kalibrierungsschritt (206) kalibriert wird, wobei dieser Kalibrierungsschritt (206) das Einsetzen eines Musterteils, welches relevante Abschnitte einer optimal geformten Schaufel (1) mit nicht ausgewölbter Deckplatte (10), also wunschgemäss geformter, der Oberfläche (11) der Deckplatte (10) entsprechender Musteroberfläche simuliert, in die Umformungsvorrichtung (50) umfasst, wobei danach ein von der Umformungsvorrichtung (50) umfasster Presszylinder (100) gegen diese Musteroberfläche gefahren wird, bis der am Presszylinder (100) montierte Pressblock (40) die Musteroberfläche in einer Zielposition unmittelbar berührt, ohne die Musteroberfläche zu verformen oder zu beschädigen, wobei danach vor dem Kalibrierungsschritt (206) den Pressblock (40) nicht unmittelbar kontaktierende Stoppelemente (52) mittels an den Stoppelementen angebrachter Einstellelemente (53) der Umformungsvorrichtung (50) zum Kontakt gegen fest mit dem Pressblock (40) verbundene Anschlagelemente (54) geführt werden, ohne den Pressblock (40) zu bewegen, und wobei die Einstellelemente (53) dann bestimmungsgemäss so festgestellt werden, dass die Stoppelemente (52) über die Einstellelemente (53) bei erneutem Ausfahren des Presszylinders (100), nach dessen Rückzug, den Pressblock (40) über die Anschlagelemente (54) definiert nur bis zur vorgenannten Zielposition ausfahrbar machen.

10. Verfahren gemäss einem der vorangehenden Ansprüche, **dadurch gekennzeichnet, dass** in einem Montageschritt (218) eine neue Deckschicht, insbesondere einer metallischen Honigwabenschicht mit sich von der Deckplatte (10) weg erstreckenden Waben, vorzugsweise durch Auflötung auf die Deckplatte (10), aufgebracht wird, wobei eine äussere Oberfläche dieser Deckschicht im Wesentlichen parallel zur Oberfläche (11) der Deckplatte (10) verläuft.

11. Vorrichtung zur Umformung einer Deckplatte (10) einer Turbinenschaufel (1) unter Durchführung eines Verfahrens nach einem der Ansprüche 1 bis 4 oder 9, **dadurch gekennzeichnet, dass** in einem Trägerrahmen (58) mit beabstandet angeordneten Seitenelementen (57) und einem Basiselement (56) und einem Verbindungselement (60), welche sich jeweils zwischen den Seitenelementen (57) erstrecken, eine durch einen am Verbindungselement (60) angebrachten Presszylinder (100) bewegliche Druckplatte (54) und durch eine Basisplatte (51) begrenzte Druckzelle (49) für die Schaufel (1) bereitgestellt ist, wobei die Schaufel (1) in der Druckzelle (49) mittels Befestigungselemente zwischen sich seitlich der Schaufel (1) von der Basisplatte (51) zur Druckplatte (54) zu freien Enden erstreckenden und die Druckzelle (49) seitlich begrenzenden Stoppelementen (52) feststellbar ist, und wobei die Druckzelle (49) durch Pressen der Druckplatte (54) mittels des Presszylinders (100) auf die Schaufel (1) und gegen die die Druckplatte (54) stoppend ausgestalteten Stoppelemente (52) schliessbar ist.

12. Vorrichtung nach Anspruch 11, **dadurch gekennzeichnet, dass** eine Anschlaghöhe der Stoppelemente (52) durch sich an den freien Enden der Stoppelemente (52) anschliessende Einstellelemente (53) über einen Bereich von einem Millimeter bis 20% eines Abstandes des Schaufelfusses (34) zum Schaufelkopf (33) der Schaufel (1) einstellbar ist.

13. Vorrichtung nach Anspruch 11 oder 12, **dadurch gekennzeichnet, dass** die durch den Presszylinder (100) unter Druck setzbare Druckplatte (54) über eine im Wesentlichen parallel zur Druckplatte (54) verlaufende Druckfläche (41) eines Pressblock (40) eine am Basiselement (51) festgestellte Schaufel (1) pressend kontaktiert, wobei der Pressblock (40) vorzugsweise aus einem Material gefertigt ist, welches weicher als das Material der Deckplatte (10) ist, vorzugsweise aus Aluminium, und dass der Pressblock (40) auf der Druckfläche (41) eine vorzugsweise mittig angeordnete Auswölbung (42) aufweist.

14. Turbinenschaufel (1) einer Turbomaschine, wobei die Turbinenschaufel (1) eine Deckplatte (10) umfasst, **dadurch gekennzeichnet, dass** die Deckplatte (10) mittels eines Verfahrens nach einem der Ansprüche 1 bis 10 und/oder einer Umformungsvorrichtung nach einem der Ansprüche 11 bis 13 umgeformt ist.

15. Verwendung eines Verfahrens nach einem der Ansprüche 1 bis 10 und einer Vorrichtung nach einem der Ansprüche 11 bis 13 zur Umformung einer Deckplatte (10) einer Turbinenschaufel (1) einer Turbomaschine.
